(19) Europäisches Patentamt
European Patent Office
Office européen des brevets

(11) **EP 4 369 129 A1**

(12) **EUROPEAN PATENT APPLICATION**

(43) Date of publication:
**15.05.2024   Bulletin 2024/20**

(51) International Patent Classification (IPC):
***G05B 23/02*** (2006.01)

(21) Application number: **23206140.8**

(22) Date of filing: **26.10.2023**

(52) Cooperative Patent Classification (CPC):
**G05B 23/0254; G05B 23/024; G05B 23/0243; G05B 23/0248;** G05B 2219/31455

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022   JP 2022180223**

(71) Applicant: **OMRON Corporation**
**Kyoto 600-8530 (JP)**

(72) Inventors:
• **KIMURA, Katsuyuki**
**Kyoto-shi, 600-8530 (JP)**
• **KAWANOUE, Shinsuke**
**Kyoto-shi, 600-8530 (JP)**

(74) Representative: **Mewburn Ellis LLP**
**Aurora Building**
**Counterslip**
**Bristol BS1 6BX (GB)**

(54) **INFORMATION PROCESSING DEVICE, INFORMATION PROCESSING METHOD, AND INFORMATION PROCESSING PROGRAM**

(57)      An information processing device (1) is provided that includes an obtaining unit (113) configured to obtain status data of a plurality of mechanisms in a processing step carried out in a production line, an abnormality detector (117) configured to detect an abnormality based on the status data obtained by the obtaining unit, a surrogate model calculator configured to calculate a surrogate model based on the status data at time of detecting the abnormality, and an estimator (119) configured to estimate an abnormality causal factor based on the sur- rogate model calculated earlier.

FIG.4

**Description**

CROSS REFERENCE TO RELATED APPLICATIONS

This nonprovisional application is based on Japanese Patent Application No. 2022-180223 filed on November 10, 2022, with the Japan Patent Office, the entire contents of which are hereby incorporated by reference.

BACKGROUND OF THE INVENTION

Field of the Invention

This disclosure relates to an information processing device, an information processing method and an information processing program.

Description of the Background Art

Production lines in facilities like plants and factories include a plurality of mechanisms, for example, conveyers and robot arms. In case an abnormal event occurs in one or more mechanisms in the production line, the whole operation possibly shuts down, which may incur tremendous damage. To avoid that, maintenance workers regularly perform the routine check of such production lines in plants and factories for any abnormal event or a predictive sign of abnormality.

Supposing that an abnormal event or a predictive sign of abnormality is detected in any mechanism of the production line, what really caused or will cause the abnormal event may possibly lie in any mechanism previous to the abnormality-detected mechanism per se. Hence, a cause-and-effect relationship between the mechanisms in the production line is an important factor that needs to be addressed in order to accurately know what really caused the abnormal event. An increasing number of mechanisms are used in production lines these days, and their operating conditions continue to change constantly. It may be thus very difficult to exactly grasp the cause-and-effect relationships among all of mechanisms used in a production line.

Conventionally, a skilled maintenance worker looks into the cause-and-effect relationship among a plurality of mechanisms in a production line based on his/her own professional expertise and experience, trying to detect the occurrence of any abnormal event or a predictive sign of abnormality in the production line. A more advanced technology is desirably developed and made available that can visualize a cause-and-effect relationship between the plurality of mechanisms in a production line to allow any unskilled or inexperienced workers to perform the maintenance operation.

For example, the apparatus described in Japanese Patent Laying-Open No. 2022-80630 is directed to visualizing the detection of an abnormal event by modelling a relationship between apparatuses in a production line.

SUMMARY OF THE INVENTION

In the meantime, there are a broad range of possible abnormal events that need to be addressed, which often require a larger number of pieces of abnormality data in order to identify what is exactly causing such abnormal events. Thus, no easy way of identifying abnormal events has so far been available.

To address these issues of the known art, the present disclosure is directed to providing an information processing device, an information processing method and an information processing program that can estimate an abnormality causal factor in a simplified manner.

In one example of the technology disclosed herein, an information processing device includes: an obtaining unit configured to obtain status data of a plurality of mechanisms in a processing step carried out in a production line; an abnormality detector configured to detect an abnormality based on the status data obtained by the obtaining unit; a surrogate model calculator configured to calculate a surrogate model based on the status data at time of detecting the abnormality; and an estimator configured to estimate an abnormality causal factor based on the surrogate model calculated earlier. The information processing device thus characterized may succeed in estimating an abnormality causal factor in a simplified manner based on the calculated surrogate model.

The information processing device further includes a cause-and-effect model generator configured to generate a cause-and-effect model of variables based on a relationship of the plurality of mechanisms, a dependency between a plurality of events associated with the plurality of mechanisms, or a relationship of control of the plurality of mechanisms. The estimator estimates an abnormality causal factor based on the surrogate model and the cause-and-effect model obtained earlier. The information processing device thus characterized may succeed in estimating an abnormality causal factor in a simplified manner based on the calculated surrogate model and cause-and-effect model.

The information processing device further includes a transmitter configured to transmit screen data for display of an estimation result obtained by the estimator. This may allow for display of the obtained estimation result, helping an operator to easily estimate an abnormality causal factor.

The transmitter transmits the screen data for display of the cause-and-effect model and a coefficient corresponding to each variable of the surrogate model calculated earlier. The cause-and-effect model and coefficient corresponding to the variable of the calculated surrogate model may be thus displayable, helping an operator to easily estimate an abnormality causal factor.

The transmitter transmits the screen data for display of an edge indicating a cause-and-effect relationship between the variables of the cause-and-effect model adjusted based on the coefficient corresponding to each variable of the surrogate model calculated earlier. The edge indicating the cause-and-effect relationship based on the coefficient may be thus adjustable, allowing an abnormality causal factor to be readily estimated.

The variable of the cause-and-effect model includes a first variable providable with any countermeasure and a second variable providable with no countermeasure. The transmitter transmits the screen data for display of the first variable and the second variable in a distinguishable manner. An abnormality causal factor may be readily estimated by thus allowing the variables providable with or with no countermeasure to be displayed in a distinguishable manner.

The surrogate model calculator calculates the surrogate model based on logistic regression using the status data in neighborhood of an abnormality that has been detected. The logistic regression used to calculate the surrogate model may allow an abnormality causal factor to be estimated in a simplified manner.

The abnormality detector calculates an abnormality score changing with time based on the status data, and the surrogate model calculator calculates the surrogate model using the status data in the neighborhood of the abnormality when the abnormality score calculated earlier is greater than or equal to a predetermined value. Thus calculating the surrogate model using the status data in the neighborhood of an ongoing abnormality may allow any abnormality causal factor to be estimated in a simplified manner.

The abnormality detector calculates the abnormality score changing with time based on the status data. The transmitter transmits the screen data for display of a change with time of the abnormality score calculated earlier at a time point. The information processing device further includes a time input receiver configured to receive the time point selected and inputted. The surrogate model calculator calculates the surrogate model using the status data in neighborhood of the status data at the time point selected and inputted to the time input receiver. In response to the input of the selected time point, the surrogate model is calculated using the status data in the neighborhood of status data at the inputted time point. Thus, an abnormality causal factor may be estimated in a simplified manner.

The information processing device further includes an adjuster configured to adjust a parameter of the surrogate model. The parameter of the surrogate model may be thus adjustable.

In one example of the technology disclosed herein, an information processing method is provided. The information processing method includes: obtaining status data of a plurality of mechanisms in a process carried out in a production line; detecting an abnormality based on the status data obtained earlier; calculating a surrogate model based on the status data at time of detecting the abnormality; and estimating an abnormality causal factor based on the surrogate model calculated earlier. The information processing device thus characterized may succeed in estimating an abnormality causal factor in a simplified manner based on the calculated surrogate model.

In one example of the technology disclosed herein, an information processing program is provided. The information processing program causes a computer to execute: obtaining status data of a plurality of mechanisms in a process carried out in a production line; detecting an abnormality based on the status data obtained earlier; calculating a surrogate model based on the status data at time of detecting the abnormality; and estimating an abnormality causal factor based on the surrogate model calculated earlier. The information processing device thus characterized may succeed in estimating an abnormality causal factor in a simplified manner based on the calculated surrogate model.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram that schematically illustrates a given situation in which a process analyzer 1 is used, process analyzer 1 being an example of the information processing device according to an embodiment.
Fig. 2 is a block diagram that schematically illustrates exemplified hardware elements of process analyzer 1 according to the embodiment.
Fig. 3 is a block diagram that schematically illustrates exemplified hardware elements of PLC 2 according to the embodiment.
Fig. 4 is a block diagram that schematically illustrates exemplified software elements of process analyzer 1 according to the embodiment.

Fig. 5 is a view illustrating a process carried out by a first relationship identifier 114 of process analyzer 1 according to the embodiment.

Fig. 6 is a view illustrating the process carried out by the first relationship identifier 114 of process analyzer 1 according to the embodiment.

Fig. 7 is a flow chart of a process carried out by a second relationship identifier 115 of process analyzer 1 according to the embodiment.

Fig. 8 is a conceptual diagram in which a program configuration according to the embodiment is expressed in a tree-like structure.

Fig. 9 is a view illustrating a cause-and-effect relationship for control according to the embodiment.

Fig. 10 is a block diagram that illustrates a process carried out by a third relationship identifier 116 of process analyzer 1 according to the embodiment.

Fig. 11 is a flow chart of a process carried out by a cause-and-effect model for data generator 142 according to the embodiment.

Fig. 12 is a view illustrating a process to generate non-directed graph information based on status data according to the embodiment.

Fig. 13 is a view illustrating a cause-and-effect relationship for control based on status data 223 by third relationship identifier 116 in a production process of a production line 3 according to the embodiment.

Fig. 14 is a view illustrating abnormality detection by an abnormality detector 117 according to the embodiment.

Fig. 15 is a view illustrating abnormality detection by the abnormality detector 117 according to the embodiment.

Fig. 16 is a graph used to describe an abnormality score according to the embodiment.

Fig. 17 is a flow chart of the calculation of a surrogate model by a surrogate model calculator 118 according to the embodiment.

Fig. 18 is a drawing illustrated to describe the concept of a surrogate model according to the embodiment.

Fig. 19 is a graph used to describe the calculation of a surrogate model using logistic regression according to the embodiment.

Fig. 20 is a diagram used to describe the regularization for control of overfitting according to the embodiment.

Fig. 21 is a flow chart of the estimation of an abnormality causal factor by an estimator 119 according to the embodiment.

Fig. 22 is a diagram used to describe the estimation of an abnormality causal factor by an estimator 119 according to the embodiment.

Fig. 23 is a table used to describe an omitted variable according to the embodiment.

Fig. 24 is another diagram used to describe the estimation of an abnormality causal factor by the estimator 119 according to the embodiment.

Fig. 25 is another flow chart of the calculation of a surrogate model according to the embodiment.

DESCRIPTION OF THE PREFERRED EMBODIMENTS

Embodiments are hereinafter described in detail referring to the accompanying drawings. The same or similar components and units in the drawings are simply illustrated with the same reference signs, redundant description of which will basically be omitted. Modified embodiments hereinafter described may be suitably selected and combined.

A process analyzer according to an embodiment is hereinafter described with reference to the accompanying drawings. The process analyzer is an example of the information processing device disclosed herein.

<1. Example of application>

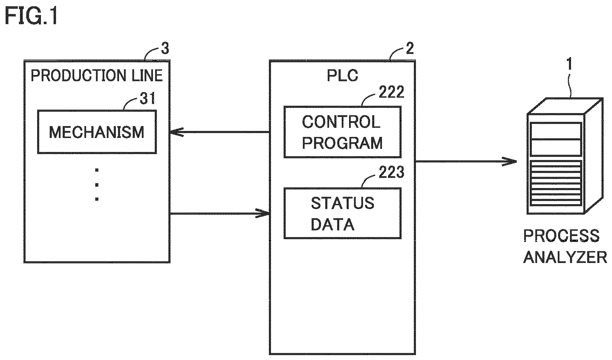

Fig. 1 is a block diagram that schematically illustrates a given situation in which a process analyzer 1 is used. Process analyzer 1 is an example of the information processing device according to an embodiment. As illustrated in Fig. 1, process analyzer 1 according to this embodiment obtains status data 223 relevant to statuses of a plurality of mechanisms 31 of a production line 3. Production line 3 may include a plurality of apparatuses or include one apparatus alone such as a packaging machine. The number of apparatuses is not particularly limited insofar as any product is producible in this product line. Each mechanism 31 may include one or a plurality of apparatuses or may include part of an apparatus. The number of apparatuses is not particularly limited insofar as the mechanism is allowed to execute any step of a production process. In case one mechanism 31 includes part of an apparatus, the plurality of mechanisms 31 altogether may constitute one whole apparatus. In case one apparatus executes a plurality of processing steps, the apparatus may be regarded as including different mechanisms 31. Supposing that one apparatus executes first and second processing steps, the apparatus in charge of the first processing step may be regarded as a first mechanism 31, and the apparatus in charge of the second processing step may be regarded as a second mechanism 31. Status data 223 may contain all kinds of data associated with the statuses of mechanisms 31 included in production line 3. An apparatus, in whole or in part, may constitute each mechanism 31. Examples of the apparatus may include conveyer, robot arm, servo motor, cylinder (molding machine), suctioning pad, cutter, and sealer. Each mechanism 31 may be a multifunction apparatus including, for example, printing device, mounting device, reflow furnace and/or substrate testing device. Mechanisms 31 may each further include, other than the before-mentioned apparatuses that involve some kind of physical operations, a device in charge of internal processes, for example, a device that detects certain information using sensors, a device that obtains data from sensors, a device that detects certain information in obtained data, and/or a device that processes obtained data. Taking, for instance, a production line including an optical sensor that detects a mark attached to a target product being transported on a conveyer, mechanism 31 may be the optical sensor or a device that uses information detected by the optical sensor. Each piece of status data 223 may be data indicating at least one of the following examples; torque, speed, acceleration rate, temperature, electric current, voltage, pneumatic pressure, pressure, flow rate, position, dimension (height, length, width), and area dimension. Such status data 223 may be obtained by using a measuring device, for example, a known sensor or camera. For example, a float sensor may be used to obtain the flow rate. An image sensor may be used to obtain the position, dimension, and area dimension.

Status data 223 may include data obtained from one or a plurality of measuring devices. Status data 223 may be directly obtained by a measuring device or may be data obtainable by processing the data of the measuring device, for example, position data obtainable from image data. Each piece of status data 223 is obtained correspondingly to each mechanism 31. The measuring devices are arranged in a manner that they can monitor mechanisms 31 of production line 3. A PLC 2 activates production line 3 and collects status data 223 from each measuring device. A controller 11 obtains, from PLC 2, status data 223 relevant to the status of each mechanism 31 when production line 3 is normally operating.

Process analyzer 1 according to this embodiment obtains a control program 222 for control of the whole operation of production line 3. Control program 222 may include all kinds of programs used for control of the operation of each mechanism 31 of production line 3. Control program 222 may include one or a plurality of programs. Control program 222 may be described using at least one of the following languages so that this program is executable by PLC 2; ladder diagram language, function block diagram language, structured text language, instruction list language, sequential function chart language and C language. In this embodiment, the operation of production line 3 is controlled by PLC (programmable logic controller) 2. Process analyzer 1 obtains, from PLC 2, a plurality of pieces of status data 223 and control program 222.

Process analyzer 1 identifies a cause-and-effect relationship (first cause-and-effect relationship) between a plurality of mechanisms 31 in a production process carried out in production line 3. In one example, the first cause-and-effect relationship may otherwise be referred to as a cause-and-effect model for design.

Process analyzer 1 analyzes control program 222 and thereby identifies a cause-and-effect relationship (second cause-and-effect relationship) between the plurality of mechanisms 31 based on control program 222. In one example, the second cause-and-effect relationship may otherwise be referred to as a cause-and-effect model for control.

Process analyzer 1 analyzes status data 223 thus obtained and thereby identifies a cause-and-effect relationship (third cause-and-effect relationship) between the plurality of mechanisms 31. In one example, the third cause-and-effect relationship may otherwise be referred to as a cause-and-effect model for data.

Process analyzer 1 according to this embodiment estimates an abnormality causal factor based on each of the cause-and-effect models and a result of abnormality detection.

<2. Hardware configuration of process analyzer>

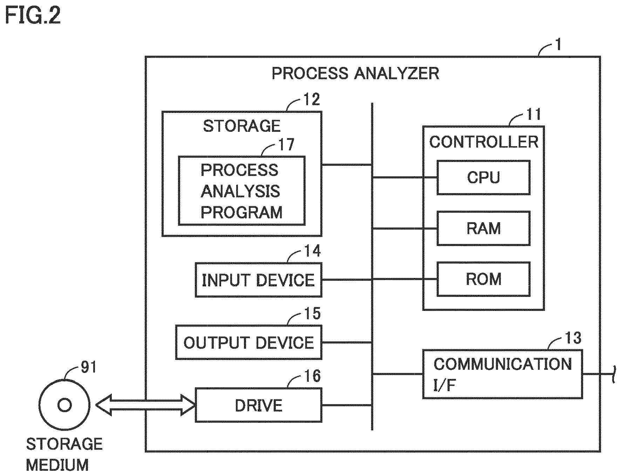

Fig. 2 is a block diagram that schematically illustrates exemplified hardware elements of process analyzer 1 according to the embodiment. As illustrated in Fig. 2, process analyzer 1 according to this embodiment is a computer including a controller 11, a storage 12, a communication interface 13, an input device 14, an output device 15, and a drive 16, in which these devices are electrically connected to one another. With reference to Fig. 2, the "communication I/F" refers to the communication interface of this analyzer.

Controller 11 includes a hardware processor; CPU (Central Processing Unit), RAM (Random Access Memory) and ROM (Read Only Memory). Controller 11 controls these elements correspondingly to an information process to be executed. Storage 12 is an auxiliary storage, for example, a hard disc drive or a solid state drive, in which a process analysis program 17 to be executed by controller 11, for example, is storable.

This process analysis program 17 causes process analyzer 1 to analyze the cause-and-effect relationship between a plurality of mechanisms 31 in a production process carried out in production line 3 based on status data 223, control program 222 and information relevant to the production process in production line 3.

Communication interface 13 is, for example, an interface for wired or wireless communication through a network, examples of which include wired LAN (Local Area Network) module and wireless LAN module. Process analyzer 1 is allowed to perform data communication with PLC 2 through a network using communication interface 13. The network used then may be one suitably selected from the Internet, wireless communication networks, mobile communication networks, telephone networks, and exclusive networks.

Input device 14 is used to input data and instructions, examples of which include mouse and keyboard. Output device 15 is used to output data and instructions, examples of which include display and speaker. An operator can operate process analyzer 1 using input device 14 and output device 15.

Drive 16 is used to read a program stored in a storage medium 91, examples of which include CD drive and DVD drive. The type of drive 16 to be used may be decided suitably for the type of storage medium 91. Process analysis program 17 may be stored in this storage medium 91.

In storage medium 91, information of a program, for example, is storable electrically, magnetically, optically, mechanically or chemically in a manner that the information stored in this medium is readable by a computer, a device or a machine. Process analyzer 1 may obtain process analysis program 17 from this storage medium 91.

Fig. 2 illustrates an example of storage medium 91; a disc-like storage medium such as CD or DVD. Storage medium 91 may be selected from any other storage mediums instead of the disk-like mediums. Examples of the other storage mediums may include semiconductor memories such as flash memories.

The hardware elements of process analyzer 1 may be deleted, replaced or added suitably for what is required of the embodiment. For instance, controller 11 may include a plurality of processors. Process analyzer 1 may include a plurality of information processing devices. Process analyzer 1 may be an information processing device designed for exclusive use in an offered service or a general-purpose server device or PC (Personal Computer).

<3. PLC>

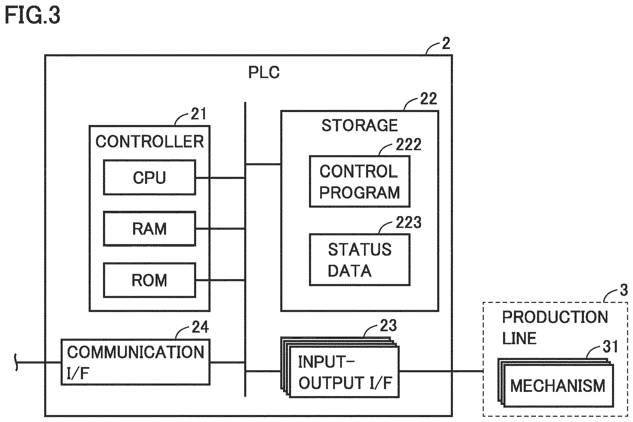

Fig. 3 is a block diagram that schematically illustrates exemplified hardware elements of PLC 2 according to this embodiment. As illustrated in Fig. 3, PLC 2 is a computer including a controller 21, a storage 22, an input-output interface 23 and a communication interface 24, in which these devices and interfaces are electrically connected to one another. PLC 2 is thus allowed to control the operation of each mechanism 31 of production line 3. With reference to Fig. 3, the "input-output I/F" and "communication I/F" respectively refer to the input-output interface and communication interface.

Controller 21 includes, for example, a CPU, RAM and ROM and is configured to process pieces of information based on a program and data. Storage 22 includes, for example, RAM and/or ROM, in which control program 222 and status data 223 are storable. Control program 222 is a program for control of the whole operation of production line 3. Status data 223 is associated with the status of each mechanism 31. Input-output interface 23 is an interface for connection to an external apparatus. This interface is suitably adapted to a target apparatus to be connected. In this embodiment, PLC 2 is connected to production line 3 through input-output interface 23. In case different pieces of status data are obtainable for one apparatus, this one apparatus may be regarded as a plurality of mechanisms 31 or one mechanism 31. Hence, the number of input-output interfaces 23 may be equal to or may differ from the number of mechanisms 31 of production line 3.

Communication interface 24 may be a wired LAN module or a wireless LAN module used for wired communication or wireless communication. Communication interface 24 allows PLC 2 to perform data communication with process analyzer 1.

To be more specific, the hardware elements of PLC 2 may be deleted, replaced or added suitably for what is required of the embodiment. For instance, controller 21 may include a plurality of processors. Storage 22 may include the RAM and ROM of controller 21. Storage 22 may be an auxiliary storage, for example, a hard disc drive or a solid state drive. PLC 2 may be an information processing device designed for exclusive use in an offered service or may be replaced with a general-purpose desktop PC or a tablet PC depending on a target to be controlled.

<4. Software elements of process analyzer>

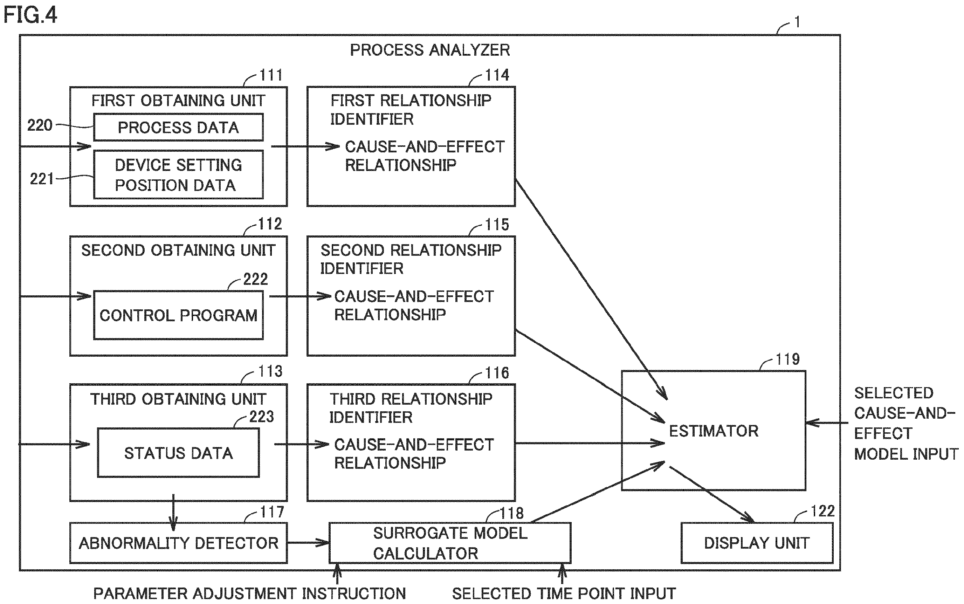

Fig. 4 is a block diagram that schematically illustrates exemplified software elements of process analyzer 1 according to the embodiment. As illustrated in Fig. 4, process analysis program 17 stored in storage 12 is imported into the RAM by controller 11 of process analyzer 1. Then, controller 11 interprets and runs process analysis program 17 in the RAM by the CPU and thereby controls the respective elements. As a result of that, process analyzer 1 according to this embodiment includes the following elements illustrated in Fig. 4 as software modules; first obtaining unit 111, second obtaining unit 112, third obtaining unit 113, first relationship identifier 114, second relationship identifier 115, third relationship identifier 116, abnormality detector 117, surrogate model calculator 118, estimator 119, and display unit 122.

First obtaining unit 111 obtains process data 220 and device setting position data 221 as information associated with a process carried out in production line 3. Second obtaining unit 112 obtains control program 222 used to control the whole operation of production line 3. Third obtaining unit 113 obtains status data 223. Process data 220 and device setting position data 221; information associated with a process carried out in production line 3, may be obtained from PLC 2 instead of first obtaining unit 111. Optionally, a user may input these pieces of data or may obtain them from information prestored in the storage.

First relationship identifier 114 identifies a cause-and-effect relationship (first cause-and-effect relationship) between a plurality of mechanisms 31 in a process carried out in production line 3 based on process data 220 and device setting position data 221 obtained by first obtaining unit 111.

Second relationship identifier 115 analyzes control program 222 obtained by second obtaining unit 112 and accordingly identifies a cause-and-effect relationship (second cause-and-effect relationship) between a plurality of mechanisms 31 based on control program 222.

Third relationship identifier 116 analyzes status data 223 obtained by third obtaining unit 113 and accordingly identifies a cause-and-effect relationship (third cause-and-effect relationship) between a plurality of mechanisms 31.

Abnormality detector 117 is used to detect any abnormality in the process carried out in production line 3. Specifically, an abnormality score is calculated based on status data 223 obtained by third obtaining unit 113, and it is determined whether the calculated abnormality score is greater than a predefined threshold. Abnormality detector 117 confirms the occurrence of an abnormal event when the abnormality score is determined as exceeding the predefined threshold. In this example, the abnormality score refers to a degree of deviation from a normal range of scores.

Surrogate model calculator 118 calculates a surrogate model based on logistic regression using status data 223 in the neighborhood of an abnormality known from an abnormality detection result. For instance, surrogate model calculator 118 calculates a surrogate model based on logistic regression using status data 223 in the neighborhood of an abnormality known from an abnormality detection result. When an abnormality score that changes with time known from the abnormality detection result is greater than or equal to a predetermined value, surrogate model calculator 118 calculates a surrogate model using status data 223 in the abnormality's neighborhood. The status data in the abnormality's neighborhood means status data with smaller vector distances.

Surrogate model calculator 118 may calculate a surrogate model using status data 223 in the neighborhood of data at a time point selected and inputted by a user.

Estimator 119 obtains a plurality of cause-and-effect models from first to third relationship identifiers 114 to 116. Estimator 119 obtains the surrogate model calculated by surrogate model calculator 118.

Estimator 119 estimates an abnormality causal factor based on the cause-and-effect model and the surrogate model obtained earlier. Specifically, estimator 119 estimates an abnormality causal factor in at least one of the plurality of cause-and-effect models based on coefficients respectively corresponding to variables of the calculated surrogate model and then outputs the result of estimation to display unit 122. For instance, estimator 119 combines the coefficients respectively corresponding to the variables of the calculated surrogate model with the cause-and-effect models to estimate any abnormality. For example, variables with greater coefficients may be extracted and combined with the cause-and-effect models. As an alternative, an edge indicating a cause-and-effect relationship between the variables may be adjusted.

When any abnormality is detected through such adjustment, a user may be allowed to readily identify a prospective abnormality causal factor and start a recovery work sooner.

The software modules of process analyzer 1 are described in detail later with reference to an operational example. This embodiment describes an example in which the software modules of process analyzer 1 are implemented by a general-purpose CPU. The software modules described so far may be implemented, in part or in whole, by one or a plurality of dedicated hardware processors. The specific software elements of process analyzer 1 may be deleted, replaced or added suitably for what is required of the embodiment.

<5.1 First cause-and-effect relationship>

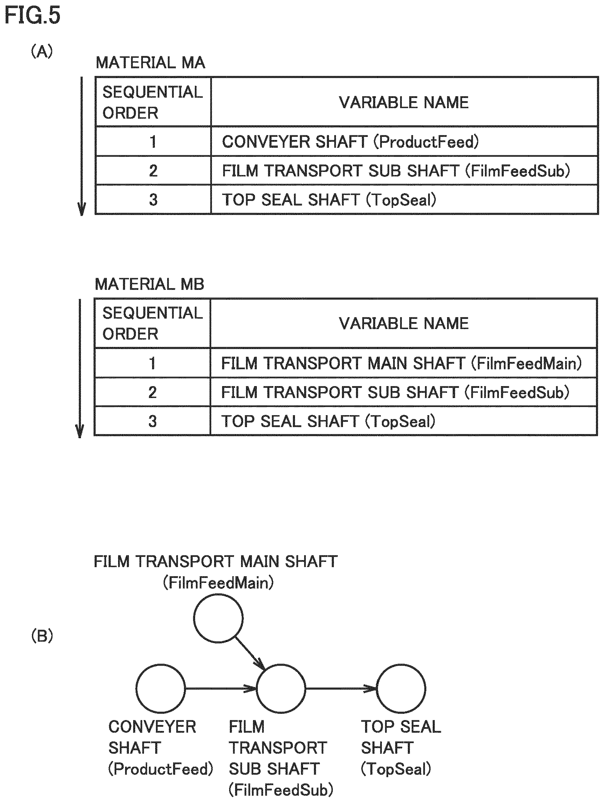

Fig. 5 is a view illustrating a process carried out by first relationship identifier 114 of process analyzer 1 according to the embodiment. The processing method hereinafter described is just an example and may be replaced with any other suitable method.

Fig. 5(A) is a table showing process data of materials MA and MB.

In this table, the processing order of material MA and variable names of the mechanism for material MA are set as the process data.

In the illustrated example, the following is set as the processing order of material MA; conveyer shaft (ProductFeed), film transport sub shaft (FilmFeedSub) and top seal shaft (TopSeal).

In this table, the processing order of material MB and variable-related information of the mechanism for material MB are set as the process data.

In the illustrated example, the following is set the processing order of material MB; film transport main shaft (FilmFeedMain), film transport sub shaft (FilmFeedSub) and top seal shaft (TopSeal).

Fig. 5(B) is a view illustrating a cause-and-effect relationship for process based on the process data of materials MA and MB.

This figure illustrates nodes that respectively correspond to the conveyer shaft (ProductFeed), film transport sub shaft (FilmFeedSub), top seal shaft (TopSeal) and film transport main shaft (FilmFeedMain).

Then, a cause-and-effect relationship for design (cause-and-effect model for design) is generated, in which the following vectors are set; vector directed from the film transport main shaft (FilmFeedMain) to film transport sub shaft (FilmFeedSub), vector directed from the film transport sub shaft (FilmFeedSub) to top seal shaft (TopSeal), and vector directed from the conveyer shaft (ProductFeed) to film transport sub shaft (FilmFeedSub).

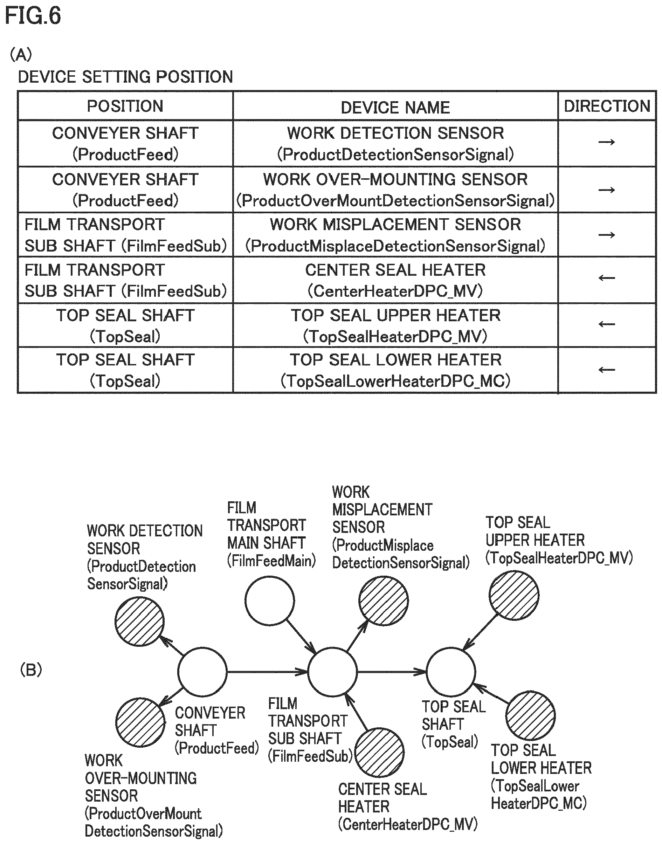

Fig. 6 is a view illustrating a process carried out by first relationship identifier 114 of process analyzer 1 according to the embodiment. The processing method hereinafter described is just an example and may be replaced with any other suitable method.

Fig. 6(A) is a table showing device setting position data.

In this table, the device name, device position, and information of vector direction are set, as the device setting position data, in a manner that they are associated with one another.

In the illustrated table, the following is set as one example. The work detection sensor (ProductDetectionSensorSignal) and rightward vector-related information are set for the conveyer shaft (ProductFeed).

The work over-mounting sensor (ProductOverMountDetectionSensorSignal) and rightward vector-related information are set for the conveyer shaft (ProductFeed).

The work misplacement sensor (ProductMisplaceDetectionSensorSignal) and rightward vector-related information are set for the film transport sub shaft (FilmFeedSub).

The center seal heater (CenterHeaterDPC _MV) and leftward vector-related information are set for the film transport sub shaft (FilmFeedSub).

The top seal upper heater (TopSealHeaterDPU_MV) and leftward vector-related information are set for the top seal shaft (TopSeal).

The top seal lower heater (TopSealLowerHeaterDPC_MC) and leftward vector-related information are set for the top seal shaft (TopSeal).

Fig. 6(B) is a view illustrating a cause-and-effect relationship for design based on the device setting position data.

With reference to Fig. 6(B), a cause-and-effect relationship for process (cause-and-effect model for design) based on the device setting position data is generated correspondingly to the cause-and-effect relationship for design illustrated in Fig. 5(B). Nodes are added based on the device setting position data in Fig. 5(B), and a cause-and-effect model for design is generated that further includes a cause-and-effect relationship between these nodes.

Specifically, the following vectors are set; vector directed from the conveyer shaft (ProductFeed) to work detection sensor (ProductDetectionSensorSignal), vector directed from the conveyer shaft (ProductFeed) to work over-mounting sensor (ProductOverMountDetectionSensorSignal), vector directed from the film transport sub shaft (FilmFeedSub) to work misplacement sensor
(ProductMisplaceDetectionSensorSignal), vector directed from the film transport sub shaft (FilmFeedSub) to work misplacement sensor
(ProductMisplaceDetectionSensorSignal), vector directed from the center seal heater (CenterHeaterDPC_MV) to film transport sub shaft (FilmFeedSub), vector directed from the top seal upper heater (TopSealHeaterDPU_MV) to top seal shaft (TopSeal), and vector directed from the top seal lower heater (TopSealLowerHeaterDPC _MC) to top seal shaft (TopSeal).

First relationship identifier 114 generates the cause-and-effect relationship for design thus characterized (cause-and-effect model for design) based on process data 220 and device setting position data 221.

<5.2 Second cause-and-effect relationship>

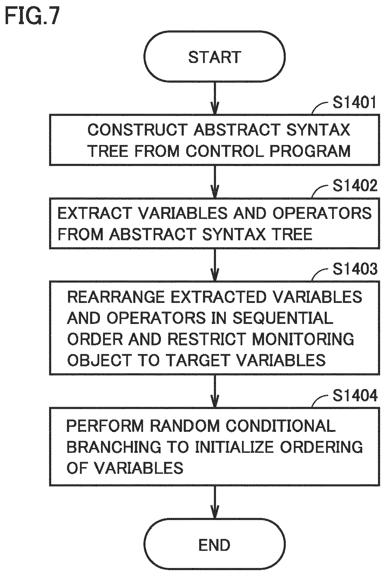

Fig. 7 is a flow chart of a process carried out by second relationship identifier 115 of process analyzer 1 according to the embodiment. The processing method hereinafter described is just an example and may be replaced with any other suitable method. An example is given below tor illustration purpose; production line 3 includes four mechanisms F1 to F4 as a plurality of mechanisms 31, and second relationship identifier 115 obtains control program 222 using variables v1 to v4 that respectively correspond to these four mechanisms F1 to F4 in above step S102.

Second relationship identifier 115, through syntactic analysis of control program 222 obtained earlier, constructs an abstract syntax tree from this control program 222 (step S1401). A known parsing technique; top-down parsing or bottom-up parsing, may be employed for construction of this abstract syntax tree. For instance, the construction of this abstract syntax tree may be assisted with a syntax analyzer adapted to handle a character string that conforms to a particular formal grammar. When the construction of the abstract syntax tree is completed, controller 11 proceeds to step S1402.

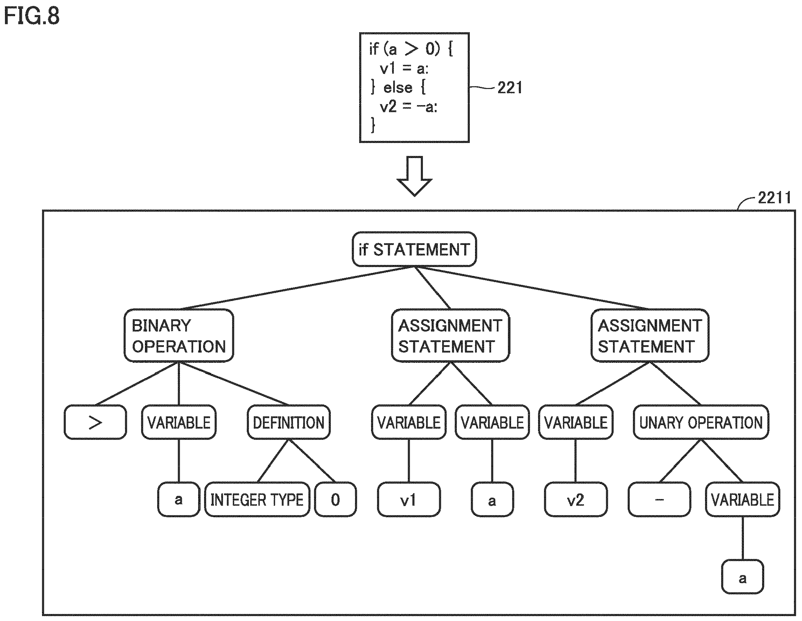

Fig. 8 is a conceptual diagram in which a program configuration according to the embodiment is expressed in a tree-like structure.

Fig. 8 illustrates an abstract syntax tree 2211 obtained from a syntax, "if(a>0)(v1=a;]else(v2=-a;]" in control program 222. The abstract syntax tree refers to a data structure in which the control program is expressed in the form of a tree-like structure for interpretation of this program.

Specifically, second relationship identifier 115 extracts, from tokens used in the program, a token relevant to the program interpretation, while skipping any other irrelevant token like brackets. Then, second relationship identifier 115 associates an operator of, for example, conditional branching with a node and associates an operand, for example, variable with a leaf. Second relationship identifier 115 is allowed to construct the abstract syntax tree illustrated in Fig. 8 as a result of such syntactic analysis of control program 222. The abstract syntax tree thus structured expresses variables, operators and inter-node relations (operator-operand relationship). This abstract syntax tree may have some of its notations corrected, changed or deleted unless what is expressed on the whole is changed.

With reference to Fig. 7 again, second relationship identifier 115 extracts, from the abstract syntax tree constructed in step S1401, operators including assignment operators, conditional branches and variables (v1 - v4) associated with mechanisms 31 (step S1402). When, for example, abstract syntax tree 2211 illustrated in Fig. 8 is obtained, second relationship identifier 115 extracts, from this abstract syntax tree 2211, ["if', "v1", "=", "a", "v2" and "-a"]. After all of them are extracted, second relationship identifier 115 proceeds to the next processing step.

Second relationship identifier 115 arranges the variables and operators extracted in step S1402 in a sequential order and then restricts an object to be monitored for execution order to target portions associated with variables (v1 - v4) corresponding to mechanisms 31 targeted for the cause-and-effect relationship to be identified (step S1403). In the example above, second relationship identifier 115 further extracts ["if', "v1" and "v2"] from ["if', "v1", "=", "a", "v2", "=", and "-a"].

In next step S1404, second relationship identifier 115 randomly selects conditional branches for a trial run of control program 222 to initialize the sequential order of the variables subject to restriction (step S1403). Specifically, second relationship identifier 115 monitors, in the trial run of control program 222, in which the variables subject to restriction are used. Thus, the sequential order of the variables subject to restriction may be initialized.

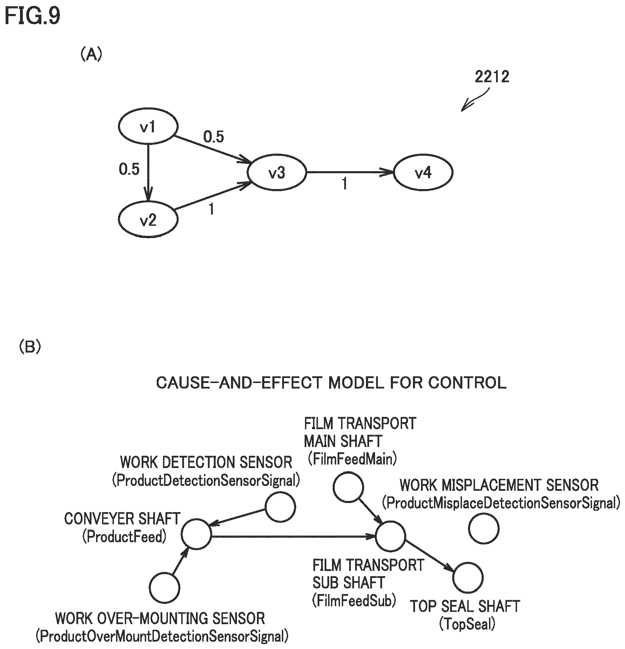

Fig. 9 is a view illustrating an exemplified cause-and-effect relationship for control according to the embodiment.

Fig. 9(A) is a view illustrating an example of initialized control program 222 in which variables v1 to v4 corresponding to four mechanisms F1 to F4 are used.

A graph 2212 illustrated in Fig. 9(A) indicates the sequential order of (1) to (5) as the initialization result.

(1) Of variables "v1 to "v4", variable "v1" is first used.
(2) Subsequent to variable "v1", variable "v2" is used by the probability of 0.5, and variable "v3" is used by the probability of 0.5.
(3) Subsequent to variable "v2", variable "v3" is used by the probability of 1.
(4) Subsequent to variable "v3", variable "v4" is used by the probability of 1.
(5) Of variables "v1 to "v4", variable "v4" is first used.

Second relationship identifier 115, through the initialization process described above, is allowed to generate the cause-and-effect relationship for control based on the control program.

Fig. 9(B) is a view illustrating the cause-and-effect relationship for control based on control program 222 by second relationship identifier 115 in a production process of production line 3.

With reference to Fig. 9(B), the following vectors are set as the cause-and-effect model for control based on the control program; vector directed from the work over-mounting sensor (ProductOverMountDetectionSensorSignal) to conveyer shaft (ProductFeed), vector directed from the work detection sensor (ProductDetectionSensorSignal) to conveyer shaft (ProductFeed), vector directed from the film transport main shaft (FilmFeedMain) to film transport sub shaft (FilmFeedSub), vector directed from the film transport sub shaft (FilmFeedSub) to top seal shaft (TopSeal), and vector directed from the conveyer shaft (ProductFeed) to film transport sub shaft (FilmFeedSub).

<5.3 Third cause-and-effect relationship>

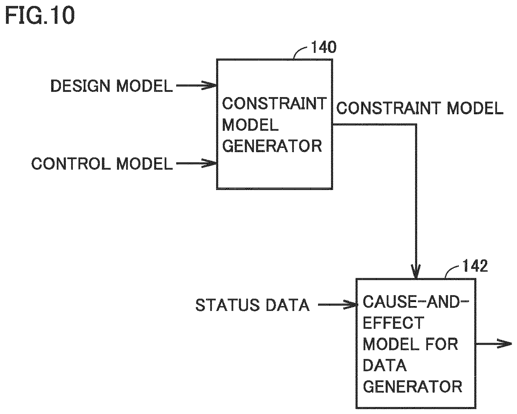

Fig. 10 is a block diagram that illustrates a process carried out by third relationship identifier 116 of process analyzer 1 according to the embodiment. The processing method hereinafter described is just an example and may be replaced with any other suitable method.

With reference to Fig. 10, third relationship identifier 116 includes a constraint model generator 140 and a cause-and-effect model for data generator 142.

Constraint model generator 140 generates a constraint model in which the cause-and-effect model for design and the cause-and-effect model for control are combined.

Cause-and-effect model for data generator 142 generates a cause-and-effect model for data based on the constraint model and status data.

The process to generate the cause-and-effect model for data is hereinafter described.

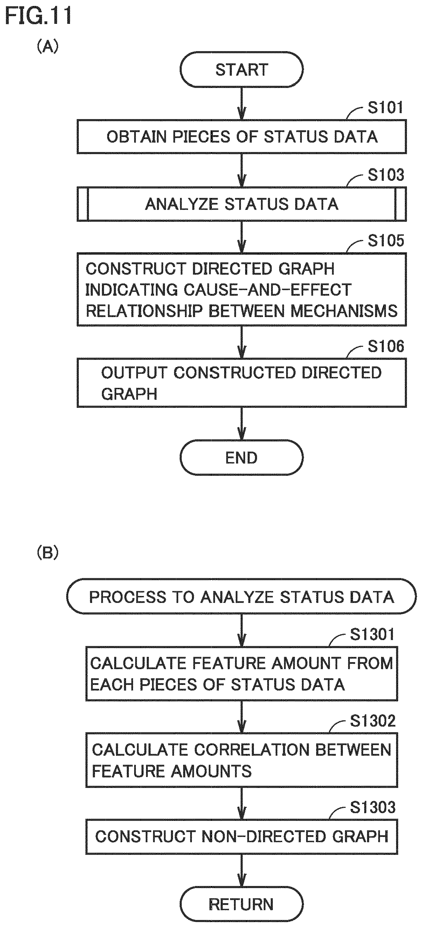

Fig. 11 is a flow chart of a process carried out by cause-and-effect model for data generator 142 according to the embodiment.

An example is given below for illustration purpose, production line 3 includes four mechanisms F1 to F4 as a plurality of mechanisms 31.

With reference to Fig. 11(A), cause-and-effect model for data generator 142 obtains status data 223 of mechanisms F1 to F4 (step S101).

Next, cause-and-effect model for data generator 142 analyzes the obtained status data (step S103).

Fig. 11(B) is a sub routine flow chart that illustrates a process to analyze the status data.

With reference to Fig. 11(B), cause-and-effect model for data generator 142 calculates a feature amount 2221 from each piece of status data 223 obtained in step S101 (step S1301). Feature amount 2221 is not necessarily limited to any particular type and may be suitably selected depending on what is required of the embodiment. Feature amount 2221 may be calculated in any manner suitable for the embodiment. In this embodiment, cause-and-effect model for data generator 142 calculates feature amount 2221 from status data 223 as follows. First, cause-and-effect model for data generator 142 divides each piece of status data 223 obtained earlier per frame in order to define a processing range used to calculate feature amount 2221. The length of each frame may be set to a dimension suitable for the embodiment.

Cause-and-effect model for data generator 142 may divide each piece of status data 223 for each frame having a certain length of time. Production line 3 is not always operated at regular time intervals. Dividing each piece of status data 223 for each frame having a certain length of time, therefore, involves the risk of a time lag between steps of the operation of mechanism 31 reflected in the frames.

Cause-and-effect model for data generator 142 may divide status data 223 into frames per takt time. The takt time is an amount of time required for production line 3 to produce a predefined number of products. The takt time may be specified based on signals used to control production line 3, for example, control signals used for PLC 2 to control the operation of each mechanism 31 in production line 3.

Cause-and-effect model for data generator 142 calculates the value of feature amount 2221 from each frame of status data 223. In case status data 223 is continuous-valued data like measurement data, cause-and-effect model for data generator 142 may calculate, as feature amount 2221, intra-frame amplitude, largest value, smallest value, average value, discrete value, standard deviation, and/or instantaneous value (one-point sample). In case status data 223 is discrete-valued data like detection data, controller 11 may calculate, as feature amount 2221, "on" time, "off" time, duty ratio, number of times of "on", or "number of times of "off" in each frame. After each feature amount 2221 is calculated, cause-and-effect model for data generator 142 may proceed to next step S1302. Each feature amount serves as a node that constitutes a cause-and-effect model for data.

Next, cause-and-effect model for data generator 142 calculates a correlation coefficient or a partial correlation coefficient between feature amounts 2221 (step S1302). The correlation coefficient may be calculated by the following Formula 1. The partial correlation coefficient may be calculated by the following Formula 2.

[Mathematical Formula 1]

$$r_{ij} = \frac{\sum_{k=1}^{n}(x_i(k) - X_i)(x_j(k) - X_j)}{\sqrt{\left(\sum_{k=1}^{n}(x_i(k) - X_i)^2\right)\left(\sum_{k=1}^{n}(x_j(k) - X_j)^2\right)}}$$

In this formula, "$r_{ij}$" represents an element in the ith row and jth column of a matrix 2222, "$x_i$" and "$x_j$" each correspond to data indicating feature amount 2221 calculated from each piece of status data 223, "$X_i$" and "$X_j$" respectively represent sample averages of $x_i$ and $x_j$, and "n" represents the number of each feature amount 2221 used to calculate correlations.

[Mathematical Formula 2]

$$r_{ij \cdot rest} = \frac{-r^{ij}}{\sqrt{r^{ii}r^{jj}}}$$

In this formula, "$R^{-1}(r^{ij})$" expresses the inverse matrix of matrix "$R(r_{ij})$", and "$r^{ij}$" indicates an ith row and jth column in the inverse matrix of matrix 2222.

Thus, cause-and-effect model for data generator 142 is allowed to obtain matrix 2222 in which the correlation coefficient and partial correlation coefficient represent each element. The correlation coefficient and partial correlation coefficient between feature amounts 2221 indicate the strength of a relationship between corresponding ones of mechanisms 31. Thus, each element of matrix 2222 determines the strength of a relationship between corresponding ones of mechanisms 31. After the correlation coefficient or partial correlation coefficient between feature amounts 2221 is calculated, cause-and-effect model for data generator 142 may proceed to next step S1303.

Cause-and-effect model for data generator 142 constructs non-directed graph information 2223 indicating the strength of a relationship between corresponding ones of mechanisms 31 based on the correlation coefficient or partial correlation coefficient between feature amounts 2221 (step S1303).

For example, cause-and-effect model for data generator 142 generates a node corresponding to each mechanism 31. When the correlation coefficient or partial correlation coefficient calculated between two mechanisms 31 has a value greater than or equal to a threshold, controller 11 couples the relevant nodes. When the correlation coefficient or partial correlation coefficient calculated between two mechanisms 31 has a value less than the threshold, controller 11 does not couple the relevant nodes. The threshold may be a fixed value defined in process analysis program 121 or a value optionally changeable by an operator. The edge width may be decided correspondingly to the magnitude of a value of the relevant correlation coefficient value or partial correlation coefficient.

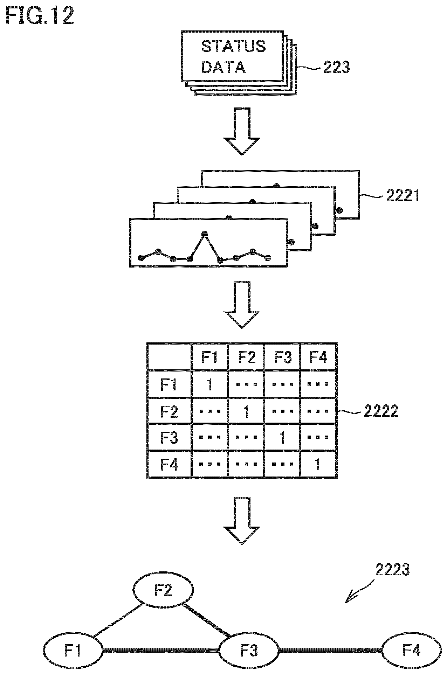

Fig. 12 is a view illustrating a process to generate non-directed graph information based on status data according to the embodiment. The process illustrated in Fig. 12 allows non-directed graph information 2223 to be generated. This figure illustrates an example in which four nodes are generated correspondingly to four mechanisms F1 to F4. An edge is formed between nodes of mechanisms F1 and F2, between nodes of mechanisms F1 and F3, between nodes of mechanisms F2 and F3, and between nodes of mechanisms F3 and F4. Because of greater correlations between mechanisms F1 and F3 and between mechanisms F3 and F4 than between the other mechanisms, inter-node edges of mechanisms F1 and F3 and of mechanisms F3 and F4 are greater than any other edges. After non-directed graph information 2223 indicating the strength of a relationship between the plurality of mechanisms 31 is thus successfully constructed, the process to analyze status data 223 according to this embodiment is over.

In the example of Fig. 12, non-directed graph information 2223 expresses a non-directed graph thus formed using an image. The output format of non-directed graph information 2223 is not necessarily limited to images but may be, for example, texts. In the example described above, the correlation coefficient or partial correlation coefficient is compared to the threshold to avoid the formation of an edge between weakly related nodes (mechanisms 31). This is, however, just an example of the removal of an edge between weakly related nodes. For example, after a graph is drawn up in which all of nodes are coupled with edges, cause-and-effect model for data generator 142 may delete edges from the graph in the order of a smaller edge of the correlation coefficient or partial correlation coefficient, so that a fit index indicating a degree of deviation (for, example, GFI, SRMR) does not exceed a threshold.

Cause-and-effect model for data generator 142 adds directionality to the non-directed graph information using the constraint model information to identify the order relation of the plurality of mechanisms 31 in production line 3.

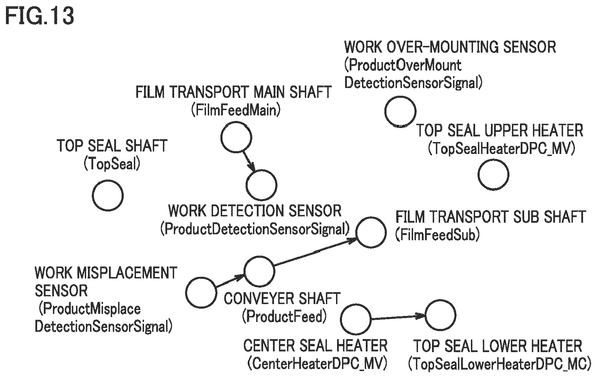

Fig. 13 is a view illustrating a cause-and-effect relationship for control based on status data 223 by third relationship identifier 116 in a production process of production line 3 according to the embodiment.

With reference to Fig. 13, this example shows an example of the generated cause-and-effect model for data.

The following vectors are set; vector directed from the work misplacement sensor (ProductMisplaceDetection-SensorSignal) to conveyer shaft (ProductFeed), vector directed from the conveyer shaft (ProductFeed) to film transport sub shaft (FilmFeedSub), vector directed from the film transport main shaft (FilmFeedMain) to work detection sensor (ProductDetectionSensorSignal), and vector directed from the center seal heater (CenterHeaterDPC _MV) to top seal lower heater (TopSealLowerHeaterDPC MC).

<6. Abnormality detection>

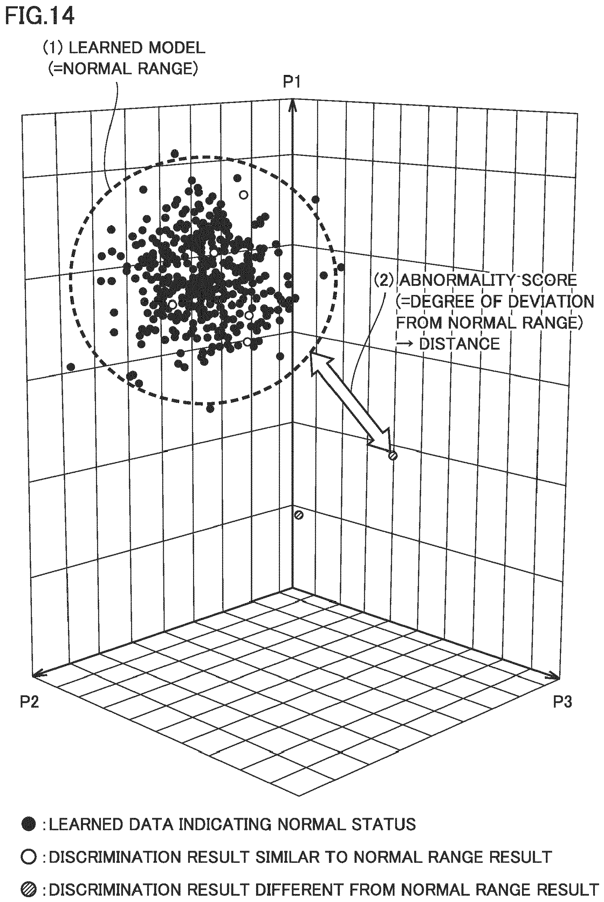

Fig. 14 is a view illustrating abnormality detection by abnormality detector 117 according to the embodiment.

With reference to Fig. 14, abnormality detector 117 detects an abnormal event based on status data 223.

In the illustrated example, data of three variables P1 to P3 is described.

As for variables P1 to P3, a three-dimensional space with three axes is set. This figure further shows, as learned models, a data group indicative of a normal range and data indicative of an abnormal status. Point group data with black dots represents a data group indicative of a normal range. On the other hand, hatched data represents data beyond the normal range. The abnormality score refers to a distance from the center point of the normal range data group. The abnormality score has a higher value with greater distance from the center point.

While this example describes a three-dimensional space with three variables P1 to P3, the present disclosure is naturally applicable to a multi-dimensional space depending on the number of variables.

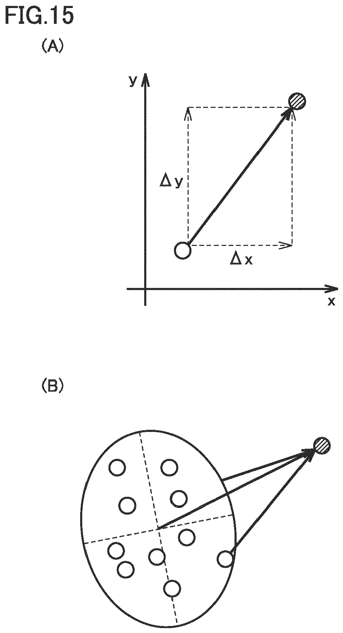

Fig. 15 is a view illustrating abnormality detection by abnormality detector 117 according to the embodiment.

With reference to Fig. 15(A), a data change from a point to another point is illustrated. This example presents a two-dimensional data change, with a change by $\Delta x$ to x axis and a change by $\Delta y$ to y axis. In the case of a two-dimensional data change, distance changes by $\Delta x$ and $\Delta y$ are calculated as the abnormality score.

With reference to Fig. 15(B), a distribution-to-point data change is illustrated. In the case of a three-dimensional data change, a distance change from a distribution center to a point is calculated as the abnormality score.
The algorithms available for the abnormality score calculation may include abnormality detection based on the Mahalanobis' distance, and abnormality detection algorithms like LOF (Local Outlier Factor) and IsolationForest.

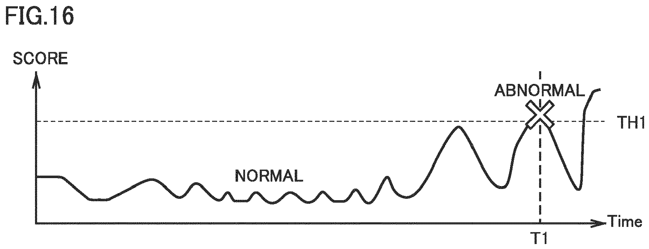

Fig. 16 is a graph used to describe an abnormality score according to the embodiment.
With reference to Fig. 16, an abnormality score calculated by abnormality detector 117 is illustrated.
The abnormality score specifically represents score values changing with the time axis. In the illustrated example, the score value is greater than a threshold TH1 at time point T1.
Abnormality detector 117 detects that an abnormal event occurred when the score value is determined as exceeding threshold TH1 at time point T1.

<7. Calculation of surrogate model>

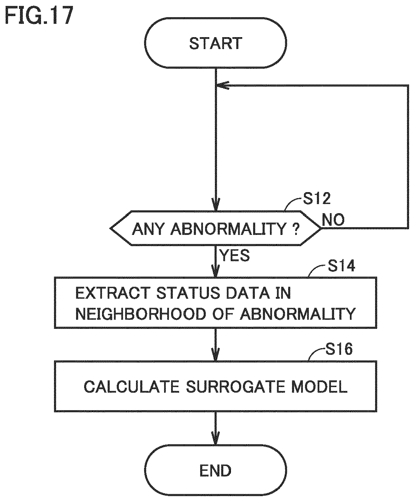

Fig. 17 is a flow chart of the calculation of a surrogate model by surrogate model calculator 118 according to the embodiment.
With reference to Fig. 17, surrogate model calculator 118 determines whether any abnormal event is occurring or has occurred (step S12). Specifically, abnormality detector 117 determines whether an abnormality detection result has been received from abnormality detector 117. Abnormality detector 117 determines whether the abnormality score is greater than threshold TH1 and then determines that an abnormal event is occurring or has occurred when the abnormality score is found to be greater than threshold TH1.
Next, surrogate model calculator 118 extracts status data in the neighborhood of the detected abnormality in accordance with the abnormality detection result obtained by abnormality detector 117 (step S14).
Surrogate model calculator 118 calculates a surrogate model (step S16).
The processing steps are then ended (End).

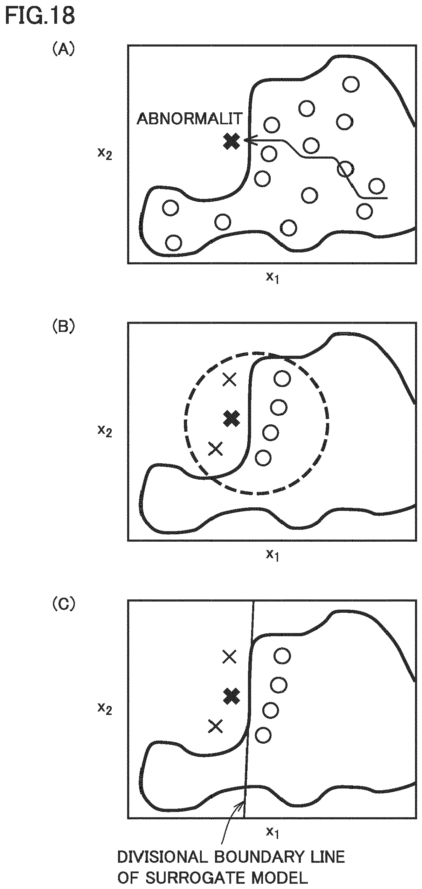

Fig. 18 is a drawing illustrated to describe the concept of a surrogate model according to the embodiment.
With reference to Fig. 18(A), a two-dimensional case using wo variables $x_1$ and $x_2$ is hereinafter given to simplify the description. This example may be applicable likewise to any other multi-dimensional cases. Variables $x_1$ and $x_2$ may be status data or may be status data subjected to dimensional compression.
The two-dimensional plane in the drawing shows a boundary line that divides events that are normal and abnormal. On the outside of the divisional boundary line is illustrated an abnormal piece of status data. The divisional boundary line model is generated through learning of a group of pieces of data that represent a normal range.
With reference to Fig. 18(B), status data in the neighborhood of a piece of status data representing abnormality. To be specific, the data to be extracted is status data in the neighborhood of variables $x_1$ and $x_2$ corresponding to the abnormality score notified by the abnormality detection result. The range of the neighborhood then may be adjustable. For example, locality (kernel width) may be adjustable using a parameter changing tool described later.
In this example, status data in the neighborhood is extracted using the LIME (Local Interpretable Model-agnostic Explanations) algorithm and exponential smoothing kernel. Status data in the neighborhood may be extracted using the SHAP (SHapley Additive exPlanations) algorithm or any other suitable method.
With reference to Fig. 18(C), a surrogate model is calculated based on the status data in the neighborhood thus extracted to draw a boundary line that divides events that are normal and abnormal.

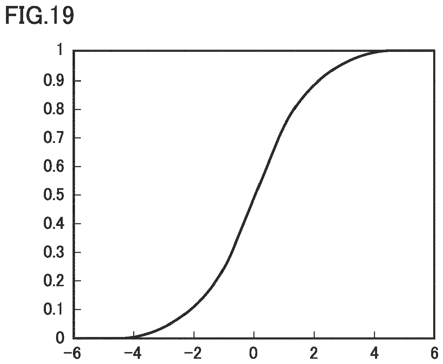

Fig. 19 is a graph used to describe the calculation of a surrogate model using logistic regression according to the embodiment
With reference to Fig. 19, the surrogate model is calculated using the known Sigmoid function.
The surrogate model based on the logistic regression is expressed in the following formula.

[Mathematical Formula 3]

$$p = \frac{1}{1 + \exp(-\sum_{i=0}^{n} \omega_i x_i)}$$

By thus calculating the surrogate model, the value of a coefficient ω corresponding to variable x may be calculated as expressed in the following formula.

[Mathematical Formula 4]

$$\omega_1 x_1 + \omega_2 x_2 + \omega_3 x_3 \ldots$$

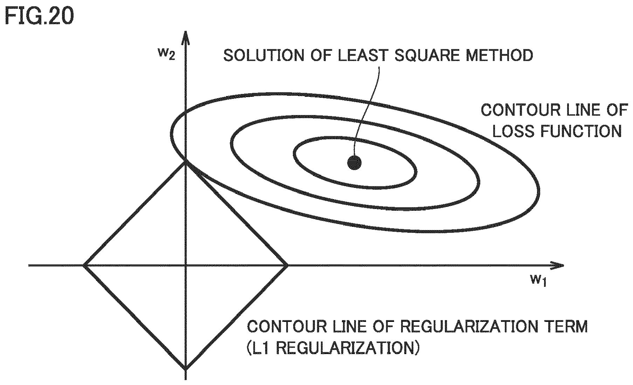

Fig. 20 is a diagram used to describe the regularization for overfitting control according to the embodiment.

With reference to Fig. 20, this example shows an example of the L1 regularization.

The surrogate model based on the L1-regularized logistic regression is expressed in the following formula.

[Mathematical Formula 5]

$$\alpha \|\omega\|_1 = \alpha(|\omega_1| + |\omega_2|)$$

The L1 regularization allows for dimensional reduction, conducing to simplification and better interpretation of the model. The regularization technique used in this example is the Lasso regression. The Ridge regression may instead be used.

The intensity of regularization then may be adjustable. For example, the regularization coefficient $\alpha$ may be adjustable using a parameter changing tool described later.

<8. Estimation of abnormality causal factor>

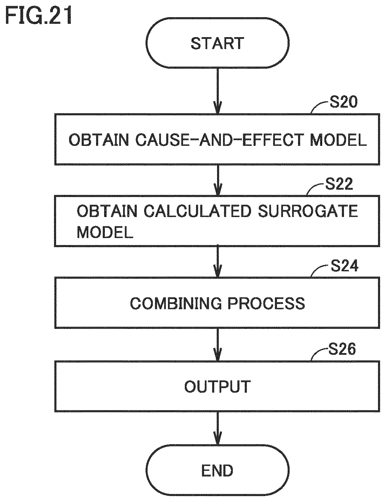

Fig. 21 is a flow chart of the estimation of an abnormality causal factor by estimator 119 according to the embodiment.

With reference to Fig. 21, estimator 119 obtains the cause-and-effect models generated by first relationship identifier 114, second relationship identifier 115 and third relationship identifier 116 (step S20).

Estimator 119 obtains the surrogate model calculated by surrogate model calculator 118 (step S22).

Next, estimator 119 executes a process to combine the obtained cause-and-effect models with the surrogate model obtained earlier (step S24).

Estimator 119 outputs an estimation result to display unit 122 (step S26).

The processing steps are then ended (End).

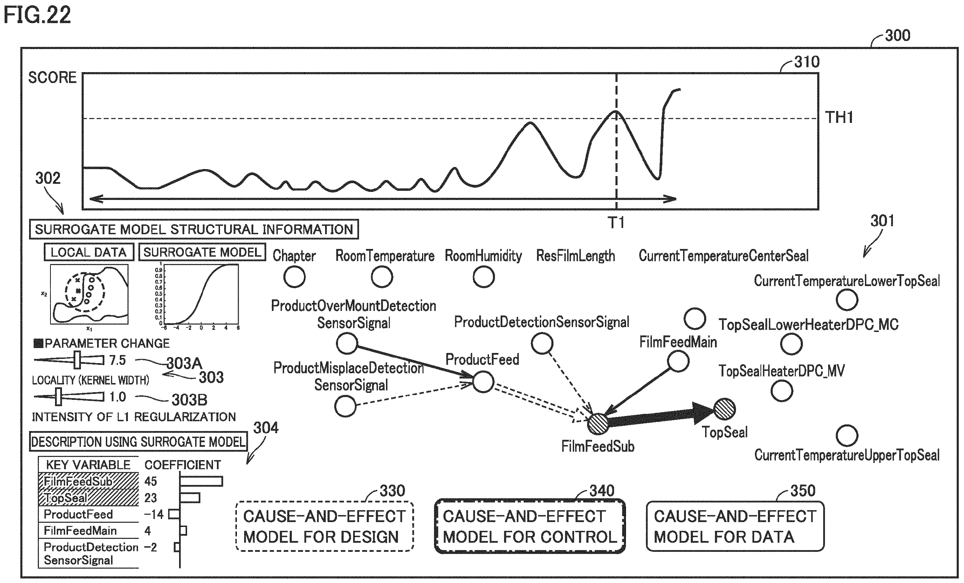

Fig. 22 is a diagram used to describe the estimation of an abnormality causal factor by estimator 119 according to the embodiment.

With reference to Fig. 22, this example shows an estimation result screen 300 showing a result estimated by estimator 119 and outputted to display unit 122.

Estimation result screen 300 includes the following; score data 310, cause-and-effect model 301, surrogate model structural information 302, parameter changing tool 303, and surrogate model descriptive information 304.

Surrogate model structural information 302 contains information relating to local data and information of the surrogate model.

Parameter changing tool 303 includes a slider 303A allowed to perform parameter adjustment of locality (kernel width) and a slider 303B allowed to perform parameter adjustment of regularization coefficient $\alpha$ representing the intensity of L1 regularization.

Surrogate model descriptive information 304 presents, using numerical and graphical illustrations, key variables in the calculated surrogate model and coefficients of the surrogate model calculated correspondingly to these variables.

In the graph, the right side indicates positive values, while the left side indicates negative values.

Estimation result screen 300 is further provided with the following buttons; button 330 for selection of a cause-and-effect model for design that can receive a user's input, button 340 for selection of a cause-and-effect model for control, and button 350 for selection of a cause-and-effect model for data.

Estimator 119 is allowed to selectively output an estimation result depending on a user's input.

This figure illustrates an example in which button 340 for selection of a cause-and-effect model for control has been clicked by a user.

Score data 310 indicates a score value that changes with a time axis. In the illustrated example, the score value is greater than a threshold TH1 at time point T1.

Abnormality detector 117 detects that an abnormal event occurred when the score value is determined as exceeding threshold TH1 at time point T1.

Surrogate model calculator 118 calculates the surrogate model in accordance with the abnormality detection result obtained by abnormality detector 117.

For example, surrogate model calculator 118 calculates the surrogate model and outputs coefficients respectively corresponding to variables of the calculated surrogate model.

The surrogate model is used for the description of this example.

This example presents data of the variable coefficients of the calculated surrogate model.

The illustrated example presents the following data; film transport sub shaft (FilmFeedSub) showing "45", top seal shaft (TopSeal) showing "23", conveyer shaft (ProductFeed) showing "-14", film transport main shaft (FilmFeedMain) with "4", and work detection sensor (ProductDetectionSensorSignal) showing "-2".

Of the calculated variable coefficients, estimator 119 extracts variables corresponding to the largest and the second largest variables. In the illustrated example, the film transport sub shaft (FilmFeedSub) and top seal shaft (TopSeal) are extracted. While the extraction of the variable corresponding to the second largest coefficient is described in this example, other variables may be extracted; for example, variable corresponding to the largest coefficient or variables having any coefficients showing values greater than or equal to a predetermined value.

In this example, button 340 for the cause-and-effect model for control has been selected.

Estimator 119 identifies nodes of the film transport sub shaft (FilmFeedSub) and top seal shaft (TopSeal) in the cause-and-effect model for control.

Estimator 119 extracts nodes connected to the identified nodes in the selected cause-and-effect model for control.

Estimator 119 extracts the node of the conveyer shaft (ProductFeed) connected to the film transport sub shaft (FilmFeedSub). Then, estimator 119 extracts, as the nodes connected to the conveyer shaft (ProductFeed); node of the work over-mounting sensor (ProductOverMountDetectionSensorSignal), and node of the work misplacement sensor (ProductMisplaceDetectionSensorSignal).

Also, estimator 119 extracts, as the nodes connected to the film transport sub shaft (FilmFeedSub); node of the work detection sensor

(ProductDetectionSensorSignal), and node of the film transport main shaft (FilmFeedMain).

Further, estimator 119 extracts the node of the film transport sub shaft (FilmFeedSub) as the node connected to the top seal shaft (TopSeal).

In this example, hatching is used to illustrate nodes of the film transport sub shaft (FilmFeedSub) and top seal shaft (TopSeal) with large values of the extracted variable coefficients.

Thus, the inter-node relationship in the cause-and-effect model for control may be readily identified, which may allow an abnormality causal factor to be easily estimated.

Estimator 119 performs the edge adjustment based on the calculated variable coefficients of the surrogate model. To be specific, the edge is thicker with a larger coefficient value. The edge is illustrated with a solid line when the coefficient has a positive value, while the edge is illustrated with a broken line when the coefficient has a negative value. In this example, the edge may be illustrated with different lines, in which, for example, thicker or thinner lines and solid or broken lines may be used. Instead, the edge may be displayed in different colors or may be flickered.

This may allow an operator to visually grasp and easily know an inter-variable relationship and also to consider a desirable direction of the parameter adjustment.

This example presents a result when the top seal shaft (TopSeal) undergoes an abnormal event.

In view of the cause-and-effect model for control, what is causing the abnormal event may be assumed to lie in the film transport shaft (FilmFeedSub) or work detection sensor (ProductDetectionSensorSignal).

Further, the film transport sub shaft (FilmFeedSub) with a greater coefficient may be assumed to be a highly likely cause of the abnormal event.

The coefficient codes may be confirmed as positive.

A possible countermeasure against any abnormality may be the torque reduction of the film transport sub shaft (FilmFeedSub) to estimate whether overcoming the abnormality is possible.

The work detection sensor (ProductDetectionSensorSignal), because of its small coefficient value, may be less likely to be the cause.

Thus, an abnormality causal factor may be easily estimated, and how the cause should desirably be adjusted may also be estimated in a simplified manner.

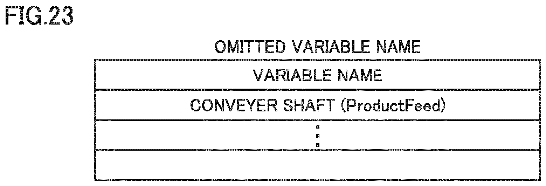

Fig. 23 is a table used to describe an omitted variable according to the embodiment.

With reference to Fig. 23, the figure shows an example in which the conveyer shaft (ProductFeed) is registered as the omitted variable. The omitted variable refers to a variable for which parameter adjustment may be difficult.

The omitted variables may be registered in advance in storage 12.

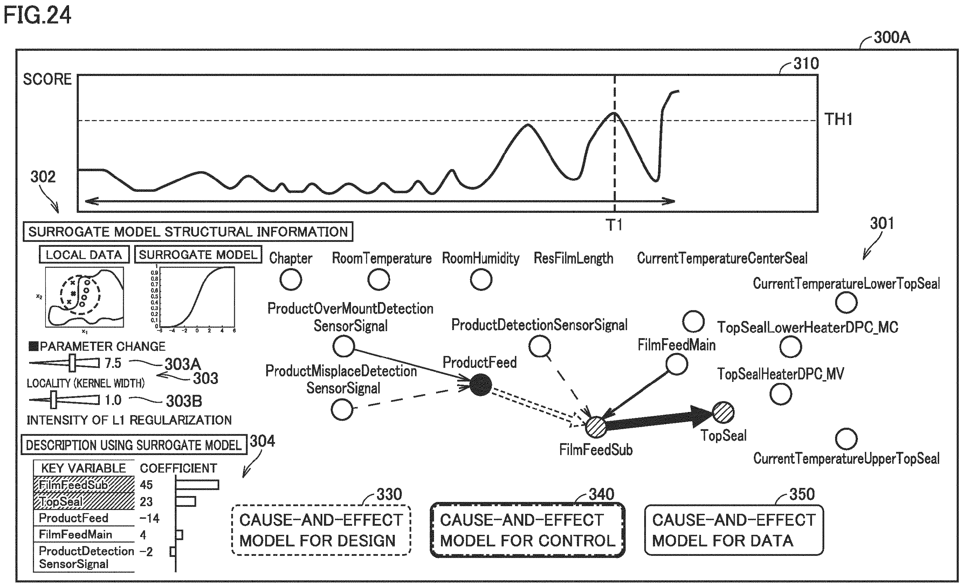

Fig. 24 is another diagram used to describe the estimation of an abnormality causal factor by the estimator 119 according to the embodiment.

With reference to Fig. 24, this example shows estimation result screen 300A showing a result estimated by estimator 119 and outputted to display unit 122. This diagram shows a different manner of display of nodes corresponding to the conveyer shaft (ProductFeed), as compared with estimation result screen 300 described with reference to Fig. 22.

To be specific, estimator 119 executes a process to obtain information associated with the omitted variables registered in storage 12 and combine the obtained information with the cause-and-effect models This example uses a black circle for indication of the omitted variable. Thus, the inter-node relationship in the cause-and-effect model for control may be readily identified, which may allow an abnormality causal factor to be easily estimated.

In the description above, the abnormality detection is confirmed when the score value of score data 310 is greater than threshold TH1 at time point T1. The earlier example further described the surrogate model calculation based on data in the neighborhood of the detected abnormality.

An optional time point may be selected and set by a user as time point T1. A user may, for example, set an optional time point using a pointing device and obtains the score value at the set time point. Data at the time point may be extracted based on the obtained score value as described earlier, so that the surrogate model is calculated based on data in the neighborhood of the extracted data. The variables with the largest and the second largest coefficients may be extracted to display the estimation of the selected cause-and-effect model selected as described earlier.

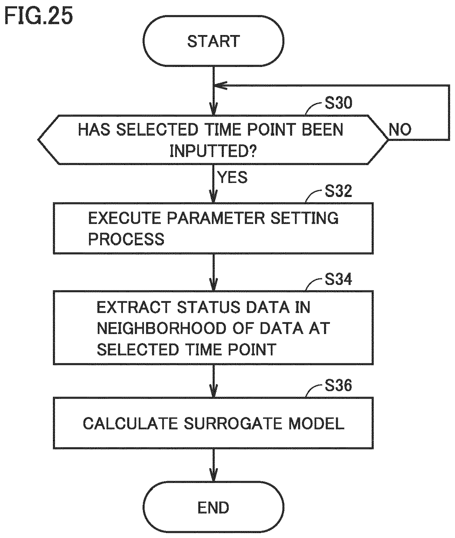

Fig. 25 is another flow chart of the calculation of a surrogate model according to the embodiment.

With reference to Fig. 25, surrogate model calculator 118 determines whether a certain time point has been selected and inputted (step S30).

Surrogate model calculator 118 executes a parameter setting process (step S32). The parameter setting process sets parameters for the surrogate model calculation based on the locality (kernel width) and regularization coefficient $\alpha$ set by parameter changing tool 303.

Surrogate model calculator 118 extracts status data in the neighborhood corresponding to status data at the selected time point (step S34). In this example, status data in the neighborhood is extracted using the LIME (Local Interpretable Model-agnostic Explanations) algorithm and exponential smoothing kernel. The neighborhood status data may be extracted by any other suitable method.

Surrogate model calculator 118 calculates a surrogate model (step S36). For instance, the surrogate model may be calculated using logistic regression as described earlier.

The processing steps are then ended (End).

The surrogate model may be thus calculated in response to the input of an optional time point to analyze a relationship relevant to a cause-and-effect model.

In this example, the surrogate model is calculated and then combined with the cause-and-effect model to estimate an abnormality causal factor. Instead, an abnormality causal factor may be estimated based on at least the surrogate model without the surrogate model being combined with any cause-and-effect model.

For example, an abnormality causal factor may be estimated based on surrogate model structural information 302 and surrogate model descriptive information 304.

Although the present invention has been described and illustrated in detail, it is clearly understood that the same is by way of illustration and example only and is not to be taken by way of limitation, the scope of the present invention being interpreted by the terms of the appended claims.

**Claims**

1. An information processing device, comprising:

    an obtaining unit (113) configured to obtain status data of a plurality of mechanisms in a process carried out in a production line;
    an abnormality detector (117) configured to detect an abnormality based on the status data obtained by the obtaining unit;
    a surrogate model calculator (118) configured to calculate a surrogate model based on the status data at time of detecting the abnormality; and
    an estimator (119) configured to estimate an abnormality causal factor based on the surrogate model calculated earlier.

2. The information processing device according to claim 1, further comprising a cause-and-effect model generator (114, 115) configured to generate a cause-and-effect model of variables based on a relationship of the plurality of mechanisms, a dependency between a plurality of events associated with the plurality of mechanisms, or a relationship of control of the plurality of mechanisms,
    wherein the estimator estimates an abnormality causal factor based on the surrogate model and the cause-and-effect model obtained earlier.

3. The information processing device according to claim 1, further comprising a transmitter (15) configured to transmit screen data for display of an estimation result obtained by the estimator.

4. The information processing device according to claim 3, wherein the transmitter transmits screen data for display of the cause-and-effect model and a coefficient corresponding to each variable of the surrogate model calculated earlier.

5. The information processing device according to claim 4, wherein the transmitter transmits screen data for display of an edge indicating a cause-and-effect relationship between variables of the cause-and-effect model adjusted based on the coefficient corresponding to each variable of the surrogate model calculated earlier.

6. The information processing device according to claim 3, wherein

   the variable of the cause-and-effect model includes a first variable providable with any countermeasure, and a second variable providable with no countermeasure, and
   the transmitter transmits screen data for display of the first variable and the second variable in a distinguishable manner.

7. The information processing device according to claim 1, wherein the surrogate model calculator calculates the surrogate model based on logistic regression using the status data in neighborhood of an abnormality that has been detected.

8. The information processing device according to claim 1, wherein

   the abnormality detector calculates an abnormality score changing with time based on the status data, and
   the surrogate model calculator calculates the surrogate model using the status data in neighborhood of the abnormality that has been detected when the abnormality score calculated earlier is greater than or equal to a predetermined value.

9. The information processing device according to claim 1, wherein

   the abnormality detector calculates an abnormality score changing with time based on the status data,
   the transmitter transmits screen data for display of a change with time of the abnormality score calculated earlier at a time point,
   the information processing device further comprises a time input receiver (14) configured to receive the time point selected and inputted, and
   the surrogate model calculator calculates the surrogate model using the status data in neighborhood of the status data at the time point received by the time input receiver.

10. The information processing device according to claim 1, further comprising an adjuster configured to adjust a parameter of the surrogate model.

11. An information processing method, comprising:

    (S101) obtaining status data of a plurality of mechanisms in a process carried out in a production line;
    (S12) detecting an abnormality based on the status data obtained earlier;
    (S16) calculating a surrogate model based on the status data at time of detecting the abnormality; and
    (S24) estimating an abnormality causal factor based on the surrogate model calculated earlier.

12. An information processing program causing a computer to execute:

    (S101) obtaining status data of a plurality of mechanisms in a process carried out in a production line;
    (S12) detecting an abnormality based on the status data obtained earlier;
    (S16) calculating a surrogate model based on the status data at time of detecting the abnormality; and
    (S24) estimating an abnormality causal factor based on the surrogate model calculated earlier.

FIG.1

PRODUCTION LINE 3

MECHANISM 31

PLC 2

CONTROL PROGRAM 222

STATUS DATA 223

PROCESS ANALYZER 1

FIG.2

PROCESS ANALYZER                                    1

STORAGE                                12

PROCESS
ANALYSIS              17
PROGRAM

CONTROLLER           11

CPU

RAM

ROM

INPUT DEVICE         14

OUTPUT DEVICE        15

COMMUNICATION        13
I/F

DRIVE                16

STORAGE              91
MEDIUM

FIG.3

# FIG.4

PROCESS ANALYZER 1

**111 FIRST OBTAINING UNIT**
220 — PROCESS DATA
221 — DEVICE SETTING POSITION DATA

**114 FIRST RELATIONSHIP IDENTIFIER**
CAUSE-AND-EFFECT RELATIONSHIP

**112 SECOND OBTAINING UNIT**
222 CONTROL PROGRAM

**115 SECOND RELATIONSHIP IDENTIFIER**
CAUSE-AND-EFFECT RELATIONSHIP

**113 THIRD OBTAINING UNIT**
223 STATUS DATA

**116 THIRD RELATIONSHIP IDENTIFIER**
CAUSE-AND-EFFECT RELATIONSHIP

**119 ESTIMATOR**

SELECTED CAUSE-AND-EFFECT MODEL INPUT

**117 ABNORMALITY DETECTOR**

**118 SURROGATE MODEL CALCULATOR**

**122 DISPLAY UNIT**

PARAMETER ADJUSTMENT INSTRUCTION      SELECTED TIME POINT INPUT

EP 4 369 129 A1

# FIG.5

(A)

MATERIAL MA

| SEQUENTIAL ORDER | VARIABLE NAME |
|---|---|
| 1 | CONVEYER SHAFT (ProductFeed) |
| 2 | FILM TRANSPORT SUB SHAFT (FilmFeedSub) |
| 3 | TOP SEAL SHAFT (TopSeal) |

MATERIAL MB

| SEQUENTIAL ORDER | VARIABLE NAME |
|---|---|
| 1 | FILM TRANSPORT MAIN SHAFT (FilmFeedMain) |
| 2 | FILM TRANSPORT SUB SHAFT (FilmFeedSub) |
| 3 | TOP SEAL SHAFT (TopSeal) |

(B)

FILM TRANSPORT MAIN SHAFT
(FilmFeedMain)

CONVEYER SHAFT (ProductFeed)  FILM TRANSPORT SUB SHAFT (FilmFeedSub)  TOP SEAL SHAFT (TopSeal)

# FIG.6

(A)

DEVICE SETTING POSITION

| POSITION | DEVICE NAME | DIRECTION |
|---|---|---|
| CONVEYER SHAFT (ProductFeed) | WORK DETECTION SENSOR (ProductDetectionSensorSignal) | → |
| CONVEYER SHAFT (ProductFeed) | WORK OVER-MOUNTING SENSOR (ProductOverMountDetectionSensorSignal) | → |
| FILM TRANSPORT SUB SHAFT (FilmFeedSub) | WORK MISPLACEMENT SENSOR (ProductMisplaceDetectionSensorSignal) | → |
| FILM TRANSPORT SUB SHAFT (FilmFeedSub) | CENTER SEAL HEATER (CenterHeaterDPC_MV) | ← |
| TOP SEAL SHAFT (TopSeal) | TOP SEAL UPPER HEATER (TopSealHeaterDPC_MV) | ← |
| TOP SEAL SHAFT (TopSeal) | TOP SEAL LOWER HEATER (TopSealLowerHeaterDPC_MC) | ← |

(B)

FIG.7

```
        ┌─────────────┐
        │    START    │
        └──────┬──────┘
               │          ⟋ S1401
        ┌──────▼───────────────────┐
        │ CONSTRUCT ABSTRACT SYNTAX │
        │ TREE FROM CONTROL PROGRAM │
        └──────┬────────────────────┘
               │          ⟋ S1402
        ┌──────▼───────────────────────┐
        │ EXTRACT VARIABLES AND OPERATORS│
        │ FROM ABSTRACT SYNTAX TREE     │
        └──────┬────────────────────────┘
               │          ⟋ S1403
        ┌──────▼───────────────────────┐
        │ REARRANGE EXTRACTED VARIABLES │
        │ AND OPERATORS IN SEQUENTIAL   │
        │ ORDER AND RESTRICT MONITORING │
        │ OBJECT TO TARGET VARIABLES    │
        └──────┬────────────────────────┘
               │          ⟋ S1404
        ┌──────▼───────────────────────┐
        │ PERFORM RANDOM CONDITIONAL    │
        │ BRANCHING TO INITIALIZE ORDERING│
        │ OF VARIABLES                  │
        └──────┬────────────────────────┘
               │
        ┌──────▼──────┐
        │     END     │
        └─────────────┘
```

FIG.8

221

```
if (a > 0) {
  v1 = a;
} else {
  v2 = -a;
}
```

2211

if STATEMENT

BINARY OPERATION
>
VARIABLE
a
DEFINITION
INTEGER TYPE
0

ASSIGNMENT STATEMENT
VARIABLE
v1
VARIABLE
a

ASSIGNMENT STATEMENT
VARIABLE
v2
UNARY OPERATION
−
VARIABLE
a

FIG.9

(A)

2212

(B)

CAUSE-AND-EFFECT MODEL FOR CONTROL

FILM TRANSPORT
MAIN SHAFT
WORK DETECTION SENSOR  (FilmFeedMain)
(ProductDetectionSensorSignal)
WORK MISPLACEMENT SENSOR
(ProductMisplaceDetectionSensorSignal)
CONVEYER SHAFT
(ProductFeed)
FILM TRANSPORT
SUB SHAFT
(FilmFeedSub)  TOP SEAL SHAFT
WORK OVER-MOUNTING SENSOR    (TopSeal)
(ProductOverMountDetectionSensorSignal)

# FIG.10

DESIGN MODEL →

CONTROL MODEL →

140

CONSTRAINT MODEL GENERATOR

CONSTRAINT MODEL

142

STATUS DATA →

CAUSE-AND-EFFECT MODEL FOR DATA GENERATOR →

# FIG.11

(A)

(B)

# FIG.12

STATUS DATA 223

2221

| | F1 | F2 | F3 | F4 |
|---|---|---|---|---|
| F1 | 1 | ... | ... | ... |
| F2 | ... | 1 | ... | ... |
| F3 | ... | ... | 1 | ... |
| F4 | ... | ... | ... | 1 |

2222

2223

F2

F1    F3    F4

FIG.13

WORK OVER-MOUNTING SENSOR
(ProductOverMount
DetectionSensorSignal)

FILM TRANSPORT MAIN SHAFT
(FilmFeedMain)

TOP SEAL UPPER HEATER
(TopSealHeaterDPC_MV)

TOP SEAL SHAFT
(TopSeal)

WORK DETECTION SENSOR
(ProductDetectionSensorSignal)

FILM TRANSPORT SUB SHAFT
(FilmFeedSub)

WORK MISPLACEMENT
SENSOR
(ProductMisplace
DetectionSensorSignal)

CONVEYER SHAFT
(ProductFeed)

CENTER SEAL HEATER
(CenterHeaterDPC_MV)

TOP SEAL LOWER HEATER
(TopSealLowerHeaterDPC_MC)

# FIG.14

(1) LEARNED MODEL
(=NORMAL RANGE)

P1

(2) ABNORMALITY SCORE
(=DEGREE OF DEVIATION
FROM NORMAL RANGE)
→ DISTANCE

P2

P3

● :LEARNED DATA INDICATING NORMAL STATUS

○ :DISCRIMINATION RESULT SIMILAR TO NORMAL RANGE RESULT

⊘ :DISCRIMINATION RESULT DIFFERENT FROM NORMAL RANGE RESULT

## FIG.15

(A)

(B)

FIG.16

FIG.17

START

ANY ABNORMALITY ? —S12

NO

YES

EXTRACT STATUS DATA IN NEIGHBORHOOD OF ABNORMALITY —S14

CALCULATE SURROGATE MODEL —S16

END

# FIG.18

(A)

ABNORMALIT

$x_2$

$x_1$

(B)

$x_2$

$x_1$

(C)

$x_2$

$x_1$

DIVISIONAL BOUNDARY LINE
OF SURROGATE MODEL

FIG.19

FIG.20

FIG.21

START

↓

OBTAIN CAUSE-AND-EFFECT MODEL — S20

↓

OBTAIN CALCULATED SURROGATE MODEL — S22

↓

COMBINING PROCESS — S24

↓

OUTPUT — S26

↓

END

FIG.22

EP 4 369 129 A1

FIG.23

OMITTED VARIABLE NAME

| VARIABLE NAME |
| --- |
| CONVEYER SHAFT (ProductFeed) |
| ⋮ |
| |

FIG.24

FIG.25

```
                        ┌─────────────┐
                        │    START    │
                        └──────┬──────┘
                               │
                               ▼         ┌─S30
          ◄───────────────────────────────────►  NO ──┐
           HAS SELECTED TIME POINT BEEN               │
                    INPUTTED?                          │
          ◄───────────────────────────────────►       │
                          │ YES                        │
                          ▼          ┌─S32             │
          ┌─────────────────────────────────┐         │
          │ EXECUTE PARAMETER SETTING        │         │
          │ PROCESS                          │         │
          └─────────────────────────────────┘         │
                          │          ┌─S34             │
                          ▼                            │
          ┌─────────────────────────────────┐         │
          │ EXTRACT STATUS DATA IN           │         │
          │ NEIGHBORHOOD OF DATA AT          │         │
          │ SELECTED TIME POINT              │         │
          └─────────────────────────────────┘         │
                          │          ┌─S36             │
                          ▼                            │
          ┌─────────────────────────────────┐         │
          │ CALCULATE SURROGATE MODEL        │         │
          └─────────────────────────────────┘         │
                          │                            │
                          ▼                            │
                   ┌─────────────┐                     │
                   │     END     │                     │
                   └─────────────┘                     │
```

Europäisches
Patentamt

European
Patent Office

Office européen
des brevets

# EUROPEAN SEARCH REPORT

Application Number

EP 23 20 6140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/191380 A1 (MINEMOTO TOSHIFUMI [JP] ET AL) 24 June 2021 (2021-06-24)<br>* paragraph [0032] – paragraph [0033]; figure 1 *<br>* paragraph [0040] – paragraph [0041]; figure 1 *<br>* paragraph [0063]; figure 2 and 4 *<br>* paragraph [0084] – paragraph [0085]; figure 5 *<br>* paragraph [0087] – paragraph [0090]; figures 7A-C *<br>* paragraph [0091] – paragraph [0100]; figures 9A-C * | 1-8, 10-12 | INV.<br>G05B23/02 |
| X | WO 2022/030567 A1 (OMRON TATEISI ELECTRONICS CO [JP])<br>10 February 2022 (2022-02-10)<br>* the whole document *<br>& US 2023/266742 A1 (SHIBAGAKI SAEKO [JP] ET AL) 24 August 2023 (2023-08-24)<br>* paragraph [0035] – paragraph [0036]; figure 1 *<br>* paragraph [0043] – paragraph [0046]; figure 3 and 5 *<br>* paragraph [0081] – paragraph [0083]; figure 6 *<br>* paragraph [0096]; figure 12 * | 1-3,6, 8-12 | |

_____

-/--

TECHNICAL FIELDS
SEARCHED (IPC)

G05B

The present search report has been drawn up for all claims

| Place of search | Date of completion of the search | Examiner |
|---|---|---|
| Munich | 7 March 2024 | Bernard, Eddy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 20 6140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 752 898 A2 (CALIFORNIA INST OF TECHN [US]) 14 February 2007 (2007-02-14)<br>* paragraph [0003] *<br>* paragraph [0025] – paragraph [0028]; figure 2 *<br>* paragraph [0037]; figure 2 *<br>* paragraph [0046]; figure 2 *<br>* paragraph [0064]; figure 2 *<br>* paragraph [0081] – paragraph [0088]; figure 2 *<br>* paragraph [0264] – paragraph [0265]; figure 2 and 15 *<br>* paragraph [0296] – paragraph [0300]; figure 2 and 15 * | 1,2, 10-12 | |
| | ----- | | |
| T | Anonymous: "Logistic regression",<br>,<br>30 October 2022 (2022-10-30), pages 1-27, XP093139084,<br>Retrieved from the Internet:<br>URL:https://en.wikipedia.org/w/index.php?title=Logistic_regression&oldid=1119121774<br>[retrieved on 2024-03-07]<br>* 1st paragraph. * | 7 | |
| | ----- | | |

**TECHNICAL FIELDS SEARCHED (IPC)**

The present search report has been drawn up for all claims

| Place of search | Date of completion of the search | Examiner |
|---|---|---|
| Munich | 7 March 2024 | Bernard, Eddy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 6140

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | | Publication date | Patent family member(s) | | Publication date |
|---|---|---|---|---|---|
| US 2021191380 | A1 | 24-06-2021 | CN | 112534374 A | 19-03-2021 |
| | | | EP | 3940488 A1 | 19-01-2022 |
| | | | JP | 2020149289 A | 17-09-2020 |
| | | | US | 2021191380 A1 | 24-06-2021 |
| | | | WO | 2020183973 A1 | 17-09-2020 |
| WO 2022030567 | A1 | 10-02-2022 | CN | 116194855 A | 30-05-2023 |
| | | | EP | 4194981 A1 | 14-06-2023 |
| | | | JP | 2022029982 A | 18-02-2022 |
| | | | US | 2023266742 A1 | 24-08-2023 |
| | | | WO | 2022030567 A1 | 10-02-2022 |
| EP 1752898 | A2 | 14-02-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022180223 A

- JP 2022080630 A